# EUROPEAN PATENT APPLICATION

(11) **EP 4 518 457 A1**
(43) Date of publication of application: **05.03.2025**
(21) Application number: 24197638.0
(22) Date of filing: 30.08.2024
(51) Int. Cl.: H04W 52/14, H04B 1/525, H04W 52/24, H04W 52/36

(54) **POWER MANAGEMENT**

(30) Priority: 01.09.2023 GB 202313329
(71) Applicant: Nokia Technologies Oy, 02610 Espoo (FI)
(72) Inventor: NIELSEN, Kim, Storvorde (DK); DHERE, Amol, Gistrup (DK); JALILI, Feridoon, Gistrup (DK); BLÜCHER BRINK, Stig, Aalborg (DK)
(74) Representative: Nokia EPO representatives

(57) **Abstract**

A method, computer program and apparatus is described comprising: determining a safe output power level of a device of a mobile communication system based, at least in part, on a determined maximum sensitivity degradation type of the device; receiving a power command, from a network node of the mobile communication system, for controlling the transmit power of the device; determining whether the determined safe output level would be exceeded by implementing the received power command; and controlling device transmissions in accordance with a self-interference control algorithm in the event that it is determined that the safe output power level would be exceeded by implementing said power command.

## Description

### Field

Example embodiments may relate to systems, methods and/or computer programs for power management and control in mobile communication systems and the like.

### Background

User devices, such as user equipment (UEs), that form part of a mobile communication system include transmitter and receiver modules. In some example embodiment, transmission and reception may be carried out at the same time. The remains a need for further development in this field.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

In the present specification, the requirement that a feature is based "at least in part" on a particular factor means that the feature could be based either entirely on that factor, or could be a based on a combination of that factor and some other factor.

In a first aspect, this specification describes a device (e.g. a user device or a user equipment (UE)) of a mobile communication system, the device comprising: means for determining a safe output power level (Pₘₐₓ) of the device based, at least in part, on a determined maximum sensitivity degradation (MSD) type of the device, wherein said safe output power level is a transmit power of the device at which self-interference would affect sensitivity of a receiver of the device by no more than a threshold amount (this may, for example, be determined by the device); means for receiving a power command, from a network node of the mobile communication system, for controlling the transmit power of the device; means for determining whether the determined safe output level would be exceeded by implementing the received power command; and means for controlling device transmissions in accordance with a self-interference control algorithm in the event that it is determined that the safe output power level would be exceeded by implementing said power command. Thus, for example, the safe output power level of the device may be based entirely on the determined maximum sensitivity degradation type of the device, or based on the maximum sensitivity degradation type of the device in combination with some other factor.

In some example embodiments, the self-interference control algorithm limits a transmit power of the device to the determined safe output power level in the event that it is determined that the safe output level would be exceeded by implementing said power command.

Controlling said device transmissions may include controlling the transmit power level of the device.

Controlling said device transmissions may include adjusting timings of one or more uplink transmissions of the device. This may be useful, for example, since self-interference may occur when one or more uplink transmissions occur at the same time as downlink reception.

Controlling said device transmissions may include prioritisation between transmissions of different types (e.g. between control and data transmissions and/or between primary and secondary carrier components).

Controlling said device transmissions may include prioritisation between uplink and downlink transmissions. For example, if uplink transmissions are prioritised, it may be permissible to exceed a determined safe output power level (at least in some circumstances), but if downlink transmissions are prioritised, this may not be allowed.

Controlling said device transmissions may include controlling power levels of said transmissions on a slot-to-slot basis.

In some example embodiments, the device further comprises means for determining said maximum sensitivity degradation type.

In some example embodiments, the device further comprises means for determining a maximum sensitivity degradation value for the device, wherein said safe output power level is determined based, at least in part, on said determined maximum sensitivity degradation value. The said maximum sensitivity degradation (MSD) value may based, at least in part, on a carrier aggregation configuration or a dual connectivity configuration of the device. The device may further comprise means for determining and storing maximum sensitivity degradation values during use of the device.

The power command may be a transmit power control (TPC) command indicating whether a transmit power level of the device should be increased or decreased. Furthermore, controlling said device transmissions may include not implementing a transmit power control command to increase the transmit power level in the event that the determined safe output level of the device has been reached or would be exceeded by said increase.

In some example embodiments, the device further comprises means for determining and updating stored safe output power level data.

In a second aspect, this specification describes a method comprising: determining a safe output power level of a device (e.g. a user device or a user equipment (UE)) of a mobile communication system based, at least in part, on a determined maximum sensitivity degradation type of the device, wherein said safe output power level is a transmit power of the device at which self-interference would affect sensitivity of a receiver of the device by no more than a threshold amount; receiving a power command, from a network node of the mobile communication system, for controlling the transmit power of the device; determining whether the determined safe output level would be exceeded by implementing the received power command; and controlling device transmissions in accordance with a self-interference control algorithm in the event that it is determined that the safe output power level would be exceeded by implementing said power command.

The self-interference control algorithm may, for example, limit a transmit power of the device to the determined safe output power level in the event that it is determined that the safe output level would be exceeded by implementing said power command.

Controlling said device transmissions may include controlling the transmit power level of the device.

Controlling said device transmissions may include adjusting timings of one or more uplink transmissions of the device. This may be useful, for example, since self-interference may occur when one or more uplink transmissions occur at the same time as downlink reception.

Controlling said device transmissions may include prioritisation between transmissions of different types (e.g. between control and data transmissions and/or between primary and secondary carrier components).

Controlling said device transmissions may include prioritisation between uplink and downlink transmissions. For example, if uplink transmissions are prioritised, it may be permissible to exceed a determined safe output power level (at least in some circumstances), but if downlink transmissions are prioritised, this may not be allowed.

Controlling said device transmissions may include controlling power levels of said transmissions on a slot-to-slot basis.

The method may further comprise determining said maximum sensitivity degradation type.

The method may further comprise determining a maximum sensitivity degradation value for the device, wherein said safe output power level is determined based, at least in part, on said determined maximum sensitivity degradation value. The maximum sensitivity degradation value may be based, at least in part, on a carrier aggregation configuration or a dual connectivity configuration of the device. The method may further comprise determining and storing maximum sensitivity degradation values during use of the device.

The said power command may be a transmit power control (TPC) command indicating whether a transmit power level of the device should be increased or decreased. Controlling said device transmissions may include not implementing a transmit power control command to increase the transmit power level in the event that the determined safe output level of the device has been reached or would be exceeded by said increase.

The method may further comprise determining and updating stored safe output power level data.

In a third aspect, this specification describes computer-readable instructions which, when executed by a computing apparatus, cause the computing apparatus to perform (at least) any method as described herein (including the method of the second aspect described above).

In a fourth aspect, this specification describes a computer-readable medium (such as a non-transitory computer-readable medium) comprising program instructions stored thereon for performing (at least) any method as described herein (including the method of the second aspect described above).

In a fifth aspect, this specification describes an apparatus comprising: at least one processor; and at least one memory including computer program code which, when executed by the at least one processor, causes the apparatus to perform (at least) any method as described herein (including the method of the second aspect described above).

In a sixth aspect, this specification describes an apparatus comprising: at least one processor; and at least one memory storing instructions that, when executed by the at least one processor, causes the apparatus to perform (at least) any method as described herein (including the method of the second aspect described above).

In a seventh aspect, this specification describes a computer program comprising instructions which, when executed by an apparatus, cause the apparatus to: determine a safe output power level of a device (e.g. a user device or a user equipment (UE)) of a mobile communication system based, at least in part, on a determined maximum sensitivity degradation type of the device, wherein said safe output power level is a transmit power of the device at which self-interference would affect sensitivity of a receiver of the device by no more than a threshold amount; receive a power command, from a network node of the mobile communication system, for controlling the transmit power of the device; determine whether the determined safe output level would be exceeded by implementing the received power command; and control device transmissions in accordance with a self-interference control algorithm in the event that it is determined that the safe output power level would be exceeded by implementing said power command. The said device may be the apparatus on which the computer program instructions are implemented.

In an eighth aspect, this specification describes a power controller (or some other means) for determining a safe output power level of a device of a mobile communication system based, at least in part, on a determined maximum sensitivity degradation type of the device, wherein said safe output power level is a transmit power of the device at which self-interference would affect sensitivity of a receiver of the device by no more than a threshold amount; an input (or some other means) for receiving a power command, from a network node of the mobile communication system, for controlling the transmit power of the device; a control module (or some other means) for determining whether the determined safe output level would be exceeded by implementing the received power command; and an output module (or some other means) for controlling device transmissions in accordance with a self-interference control algorithm in the event that it is determined that the safe output power level would be exceeded by implementing said power command.

### Brief Description of the Drawings

Example embodiments will now be described by way of non-limiting example, with reference to the accompanying drawings, in which:
FIG. 1 is a flowchart showing an algorithm in accordance with an example embodiment;
FIG. 2 is a block diagram showing output power in accordance with an example embodiment;
FIG. 3 is a block diagram showing input power in accordance with an example embodiment;
FIG. 4 is a plot demonstrating examples of interference in accordance with an example embodiment;
FIG. 5 is a message flow sequence in accordance with an example embodiment;
FIG. 6 is a flowchart showing an algorithm in accordance with an example embodiment;
FIG. 7 is a block diagram demonstrating aspects of the algorithm of FIG. 6;
FIG. 8 is a flowchart showing an algorithm in accordance with an example embodiment;
FIG. 9 is a block diagram of a system in accordance with an example embodiment;
FIG. 10 is a message flow sequence in accordance with an example embodiment;
FIG. 11 is a flowchart showing an algorithm in accordance with an example embodiment;
FIG. 12 shows plots in accordance with example embodiments;
FIG. 13 is a flowchart showing an algorithm in accordance with an example embodiment;
FIG. 14 is a block diagram showing per symbol decision for a slot in accordance with an example embodiment;
FIG. 15 is a flowchart showing an algorithm in accordance with an example embodiment;
FIG. 16 is a schematic diagram of components of one or more of the example embodiments described previously; and
FIG. 17 shows tangible media for storing computer-readable code which when run by a computer may perform methods according to example embodiments described herein.

### Detailed Description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

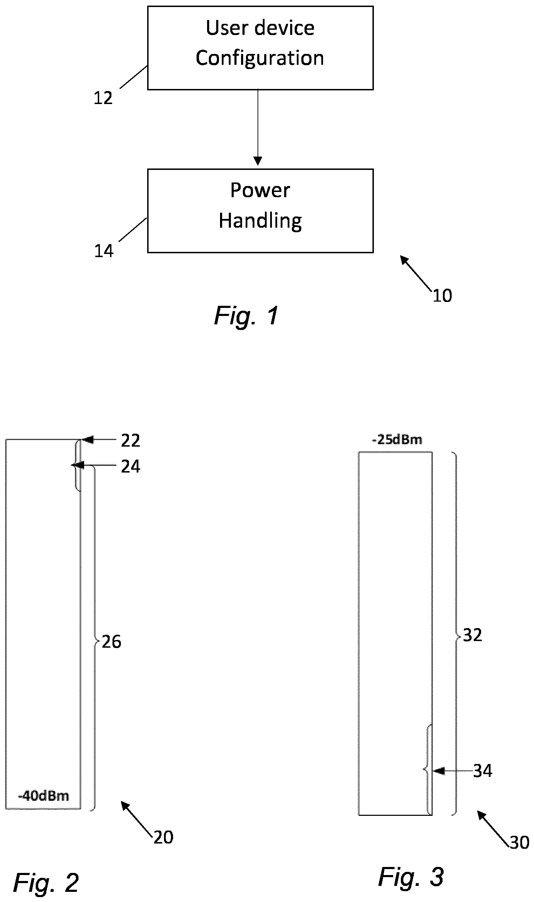

FIG. 1 is a flowchart showing an algorithm, indicated generally by the reference numeral 10, in accordance with an example embodiment.

The algorithm 10 starts at operation 12, where a device (e.g. a user device or a user equipment (UE) of a mobile communication system) is configured.

At operation 14 of the algorithm 10, the device implements a power handling algorithm in accordance with the principles described herein. The power handling algorithm may, for example, seek to address a self-interference impact of the device as a result of a carrier aggregation (CA) or a dual connectivity (DC) configuration of the device.

FIG. 2 is a block diagram showing output power, indicated generally by the reference numeral 20, in accordance with an example embodiment.

FIG. 3 is a block diagram showing input power, indicated generally by the reference numeral 30, in accordance with an example embodiment.

The block diagram 20 relates to transmit power of a device (such as the device referred to in the algorithm 10). Similarly, the block diagram 30 relates to received power of a device (such as the device referred to in the algorithm 10).

The block diagram 20 shows two different maximum power levels. A first, higher, maximum power level 22 is a maximum power level that can be delivered by the device in accordance with the relevant standard (e.g. 3GPP standard; thus the first maximum power level 22 may be referred to as 3GPP Pₘₐₓ). A second, lower, maximum power level 24 is the maximum output power that the respective device can deliver in accordance with the principles described herein. The second maximum power level 24 is lower than the first maximum power level by an amount based on a maximum sensitivity degradation (MSD) of the device (as discussed in detail below). The second maximum power range 24 is referred to herein is Pₘₐₓ.

The block diagram 20 shows a power range 26, which is an operational power range of the device. That power range is capped at the second maximum power level 24 (Pₘₐₓ), for example in an implementation of the operation 14 of the algorithm 10 discussed above.

The block diagram 30 include a power range 32 of the receiver of the device. A portion 34 of the receiver power relates to the MSD value, which defines an allowed relaxation of a reference sensitivity of the receiver due to self-interference as a result of transmissions of the device (e.g. in carrier aggregation or dual connectivity configurations).

MSD can therefore be viewed as a reduction from the UE reference sensitivity that shifts this level upwards to a higher minimum reference sensitivity level. Note that there is not necessarily a 1:1 relation between the output power level 20 that causes self-interference to degrade the reference sensitivity and the MSD value in the input power level 30 that relaxes the requirement to the reference sensitivity. The relation depends, for example, on the MSD type (as discussed further below).

The relation between the output (Tx) power of the device in the presence of an MSD type for a given band combination to the level of sensitivity degradation is known through the agreed MSD values captured in the specifications of 3GPP including the MSD type. Since this relation is known, the device may contain data information about the MSD affected carrier aggregation (CA) cases (a list of CA combinations) and their fallbacks that allows the device to determine the MSD level expected for a CA configuration.

The MSD value can be translated through the MSD type into the output power (Pₘₐₓ) that would cause self-interference. A device (e.g. a UE) can use this information to seek to mitigate self-interference as discussed in detail below.

There are different types of signal sources in the device output that may lead to relaxation through Maximum Sensitivity Degradation (MSD), but they may be regarded as belonging to two different groups. In a first group, only one uplink (UL) component carrier is configured in a carrier aggregation band combination. In a second group, two uplink (UL) component carriers are configured.

The first group includes uplink harmonics, harmonic mixing and cross-band distortion. The second group includes inter-modulation distortion (IMD). These are discussed further below.

Uplink (UL) harmonics may cause self-interference in the other downlink (DL) component carrier(s) as a result of one or more harmonics of the uplink component carrier (CC) falling inside the other DL component carrier bandwidth.

Harmonic mixing may cause self-interference when a combination of the UL harmonics coincides with the DL harmonics of the other DL component.

Cross band distortion is an expression of self-interference when the output spectrum of the UL component carrier falls inside the DL component carrier bandwidth.

Inter-Modulation Distortion (IMD) occurs when two UL component carriers inter-modulate (mix) and the product of the mixing of the UL component carriers fall inside the receiver band of one or the other DL component carrier bandwidth.

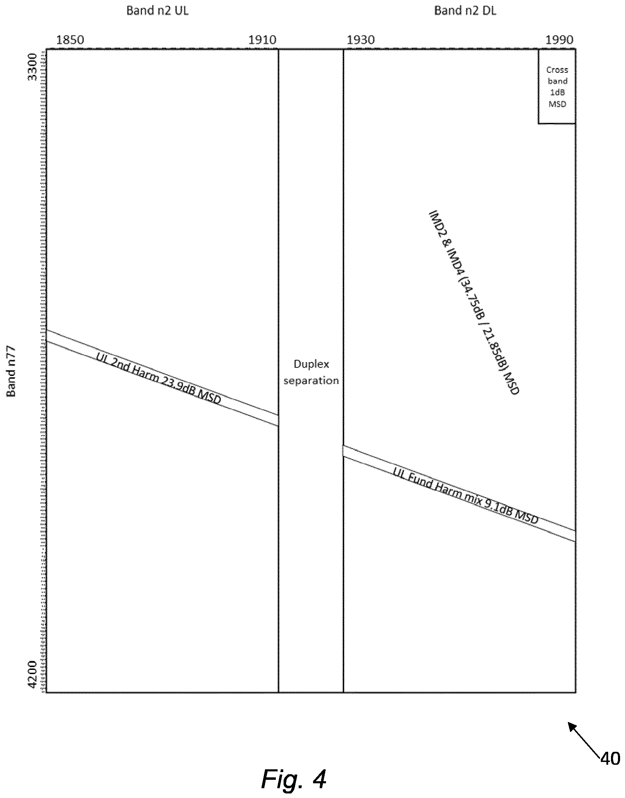

FIG. 4 is a plot, indicated generally by the reference numeral 40, demonstrating examples of interference in accordance with an example embodiment.

FIG. 4 shows a particular carrier aggregation configuration (CA_n2-n77) where the y-axis is the n77 TDD channel allocation and the x-axis is the n2 FDD channel allocation for UL and DL respectively. Depending on the channel allocation within the two operational bands, occurrences of all four types of MSD discussed above are possible. Note that the four types are specified with different MSD values, with IMD2 having the highest MSD value (34.75dB) and cross-band having the lowest MSD (1dB).

The level of self-interference at the device is design-specific and implementation-specific. Many advances in UE front-end and transmitter and receiver designs have been developed that have improved self-interference suppression. In general terms, the relationship (or ratio) between the device output power and the self-interference depends on the MSD type.

Some of the MSD types have an uplink/downlink relation of 1dB to 1dB, which means that 1dB increase in TX output power of the UE results in a 1dB increase in the self-interference level, which degrades the UE sensitivity by 1dB. In other MSD types this relationship follows the order of the product that generates the self-interference, as the example case of second harmonic of the TX falling inside the RX victim band will have a relation of 1dB to 2dB, which means that 1dB increase of TX output power results in 2dB increase to the power level of the second harmonic (so that the sensitivity of the RX victim receive band reduces by 2dB for every 1dB increase in TX output power).

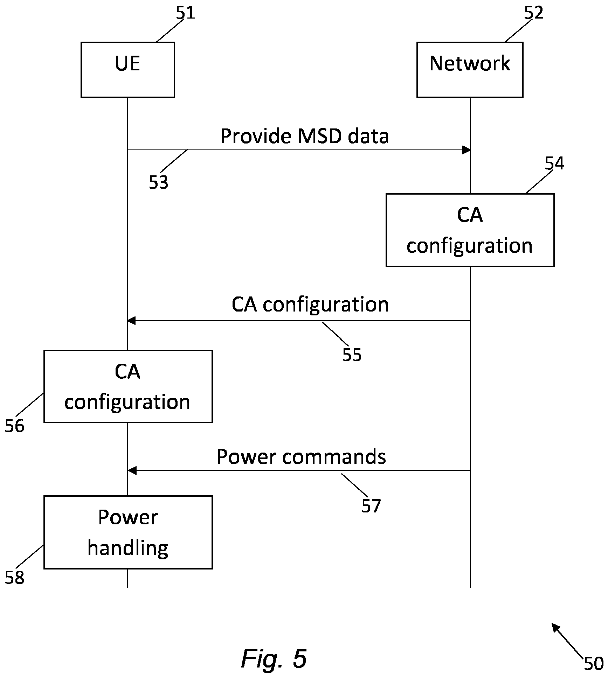

FIG. 5 is a message flow sequence, indicated generally by the reference numeral 50, in accordance with an example embodiment. The sequence 50 shows messages between a user equipment (UE) 51 and a network node 52.

In message 53, the UE 51 provides MSD data to the network 52. The MSD data may be stored, for example, in a memory of the UE 51. Based, at least in part, on the MSD data provided by the UE 51, the network 52 determines a carrier aggregation (CA) configuration for the UE 51 (at step 54) and provides that CA configuration to the UE 51 in message 55. The defined CA configuration is then implemented at the UE 51 in step 56.

The UE 51 receives power commands 57 from the network 52. The UE 51 implements a power handling algorithm in step 58 based on the power commands 57 and based on a Pₘₐₓ value, as discussed in detail below.

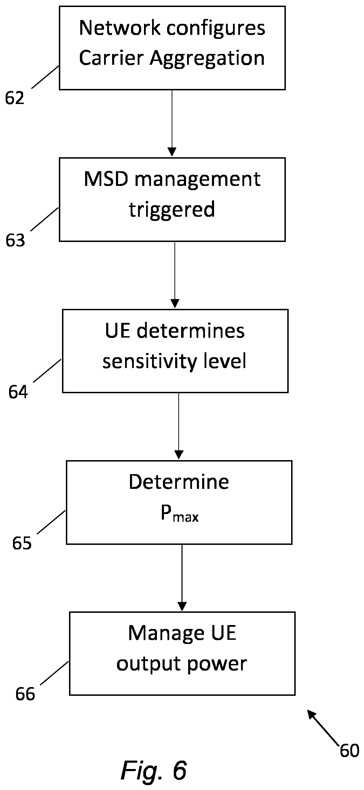

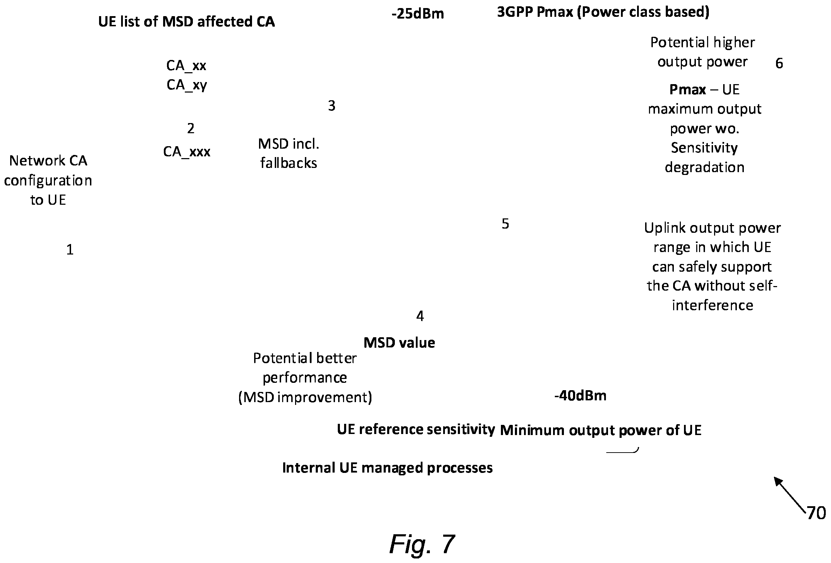

FIG. 6 is a flowchart showing an algorithm, indicated generally by the reference numeral 60, in accordance with an example embodiment. FIG. 7 is a block diagram, indicated generally by the reference numeral 70, demonstrating aspects of the algorithm 60 shown in FIG. 6.

The algorithm 60 starts at operation 62, where the relevant network (e.g. the network 52 of the message flow sequence 50) configures an MSD affected CA. This is shown on the left hand side of the block diagram 70 (see indicator 1).

At step 63 of the algorithm 60, MSD management is triggered. As shown in the block diagram 70, the UE includes a list of MSD-affected carrier aggregation combinations. In the operation 63, the UE (e.g. the UE 51 of the message flow sequence 50) checks the data it has regarding the carrier aggregation configured in operation 62 and its fallbacks.

From the data of the MSD values, the UE knows what level of sensitivity to expect from the CA. Thus, the sensitivity level is determined in the operation 64 of the algorithm 60 (see indicator 4 in the block diagram 70).

At operation 65, the MSD value determined in the operation 64 is used to determine Pₘₐₓ (the output power at which the self-interference would degrade the UE receiver sensitivity beyond the defined requirements) - see indicator 6 in the block diagram 70.

Finally, at operation 66, the UE manages its output power by limiting its transmission power intelligently (thereby implementing operation 58 of the algorithm 50).

The operation 66 may be implemented in different ways, some of which are discussed in detail below. For example, the UE may limit UL power by looking at UL and DL scheduling, slot configuration (control, data symbols) as well carrier configuration (primary CC vs. secondary CC). The UE may limit UL power until it has determined that the level of self-interference is less than what the pre-determined data indicates. By limiting the UE output power, the UE can seek to ensure (without network involvement) that the CA configuration will not cause a transmission of output power that would degrade and potentially exceed the input signal level of the RX victim receive band. After CA configuration grant, operating at the limited output power the UE will gradually learn if it may increase the Pₘₐₓ based on observations/ measurements/ determination of its own level of self-interference in the RX victim band.

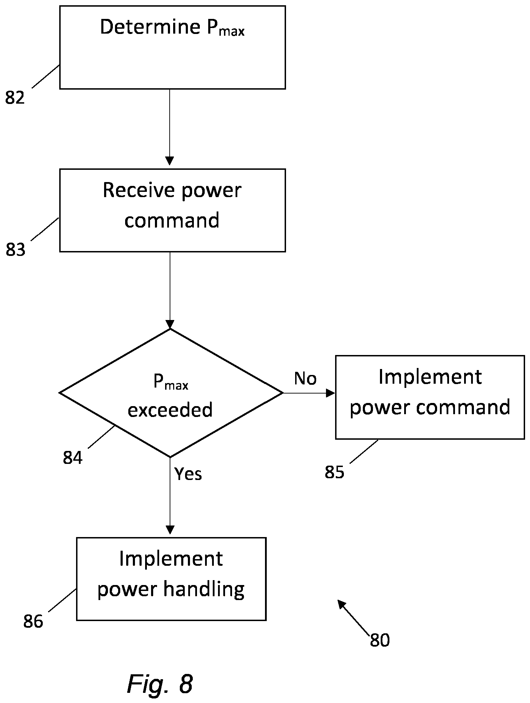

FIG. 8 is a flowchart showing an algorithm, indicated generally by the reference numeral 80, in accordance with an example embodiment.

The algorithm 80 starts at operation 82, where a safe output power level (Pₘₐₓ) of a user equipment is determined. The safe output power level may be defined a transmit power of the user equipment at which self-interference would affect sensitivity of a receiver of the user equipment by no more than a threshold amount. The degree to which the user equipment is affected can be modelled and therefore determined if the appropriate data is available. The determined safe output power level may be stored in memory. The operation 82 may be the same as the operation 65 of the algorithm 60 (and may, for example, be preceded by the operations 61 to 64 of the algorithm 60). The operations 83 to 86 of the algorithm 80 (which are described below) represent an example implementation of the operation 66 of the algorithm 60.

The safe output power level (as determined in the operation 82) may be based, at least in part, on a determined maximum sensitivity degradation (MSD) type of the user equipment (see indicator 4 in the block diagram 70). The algorithm 80 may additionally include determining said maximum sensitivity degradation type (for example, based on a carrier aggregation configuration or a dual connectivity configuration of the user equipment or during use of the user equipment).

At operation 83 of the algorithm 80, a power command for controlling the transmit power of the user equipment is received. The power command may be received from a network node of a mobile communication system. The transmit power control command may indicate whether a transmit power level of the user equipment should be increased or decreased. As discussed further below, the algorithm 80 may include determining whether or not to implement a received transmit power control command.

At operation 84, a determination is made regarding whether the safe output level (as determined in the operation 82) would be exceeded by implementing the received power command. If not, the power command is implemented at operation 85.

If implementing the power command would result in the safe output power level being exceeded, then the algorithm moves to operation 86, where power handling is implemented (see also operation 66 of the algorithm 60 described above). The operation 86 may include controlling user equipment transmissions in accordance with a self-interference control algorithm. Note that in the algorithm 80, the power control is implemented at the user equipment (rather than at the network node).

The self-interference control algorithm may be used to limit a transmit power of the user equipment to the determined safe output power level in the event that it is determined (in the operation 85) that the safe output level would be exceeded by implementing said power command.

As discussed further below, controlling the user equipment to implement power handling in the operation 86 may include one or more of: controlling the transmit power level of the user equipment; adjusting timings of one or more uplink transmissions of the user equipment; prioritisation between transmissions of different types (e.g. between control and data transmissions and/or between primary and secondary carrier components); and prioritisation between uplink and downlink transmissions. Moreover, controlling said user equipment transmissions may include controlling power levels of said transmissions on a slot-to-slot basis.

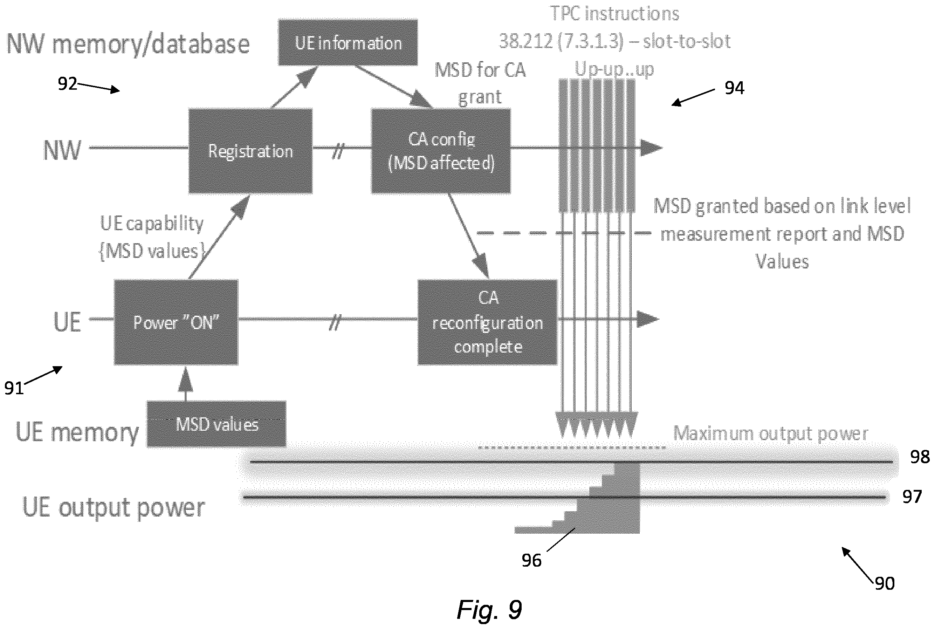

FIG. 9 is a block diagram of a system, indicated generally by the reference numeral 90, in accordance with an example embodiment. The system 90 includes a UE, indicated generally by the reference numeral 91 and a network node, indicated generally by the reference numeral 92. The UE 91 and the network node 92 are similar to the UE 51 and the network node 52 described above.

The UE 91 has a memory for storing MSD values and the network node 92 has a memory storing UE information. The network node sets a CA configuration that is provided to the UE. The UE then implements a self-interference avoidance mechanism as discussed further below.

In the system 90, the UE 91 receives Transmit Power Control (TPC) commands, indicated generally by the reference numeral 94, from the network 92. In this simple example, each of the TPC commands 94 requests that the UE output power is increased (i.e. the commands are "Up" commands). The power commands 94 are an example implementation of the operation 83 of the algorithm 80 described above.

An output power of the UE is shown by the power output 96. The power output 96 is generated in response to the TPC instructions 94. As shown in the power output 96, the output power increases in response to each "Up" TPC command, with that power being forced beyond the output power limit 97 that identifies with the allowed MSD value covered by the 3GPP specification 38.101, since there is no regulatory requirement prohibiting the NW from doing so. The UE will follow the TPC requests until it reaches the determined maximum output power (Pₘₐₓ) at which the self-interference is just tolerated (as indicated by the power level 98), thereby enabling the UE to show improved performance over the 3GPP specifications, but at the same time taking control to mitigate impacts of surpassing the limit 97. Any TPC "up" instruction from here is disregarded, since the Pₘₐₓ limit inside the UE takes effect. It is worth mentioning that this is not a violation of the relevant 3GPP standard, since the UE already has shown better performance than the requirements for UE approval of 38.101. So, all the UE does is to transmit with no more output power than can be tolerated, while the UE ensures the self-interference does not cause a call drop.

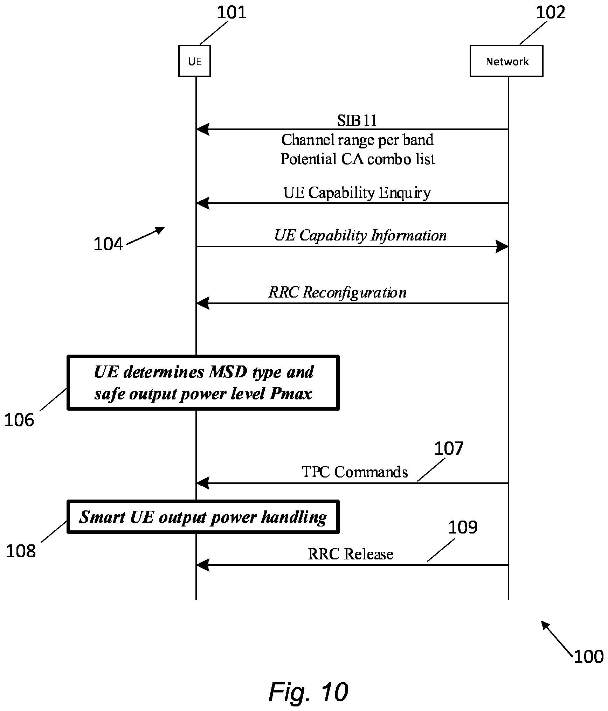

FIG. 10 is a message flow sequence, indicated generally by the reference numeral 100, in accordance with an example embodiment. The sequence 100 shows messages between a UE 101 (such as the UE 91 described above) and a network node 102 (such as the network node 92 described above). The sequence 100 shows the UE 101 reacting to network messaging and initiating the processes for self-managed MSD. The process further impacts the response to the following TPC commands from the network 102.

Following setup and configuration sequence indicated generally by the reference numeral 104, the UE 101 determines the method for MSD determination, after which the network inner loop power control for the uplink channels continues as normal and issues TPC commands as usual.

At operation 106, the UE 101 determine MSD type, if any, and a safe power level Pₘₐₓ, as discussed above.

With the safe power level set, TPC commands 107 are sent from the network node 102 to the UE 101. The TPC commands 107 may, for example, be the TPC commands 94 described above. The UE receives the TPC commands and implements a smart output handling process 108, thereby implementing a self-interference avoidance mechanism in the UE. The smart output handling process 108 may corresponding to the power handling in the operation 86 described above.

Once a session is complete, the network node 102 sends an RRC release message 109 to the UE 101.

In some example embodiments, there are three processes within the UE that manage the MSD-affected carrier aggregation (CA) cases and the UEs operation during such configured band combinations:
- Process 1: Determine if the CA is affected by MSD and set Pₘₐₓ accordingly (e.g. from memory).
- Process 2: Determine how to manage the self-interference impact caused by the MSD.
- Process 3: Determine if the current MSD value (and hence Pₘₐₓ) may be further optimized.

Aspects of these three processes are discussed in detail below.

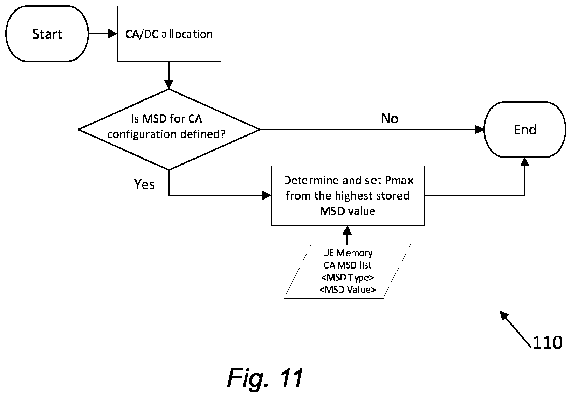

FIG. 11 is a flowchart showing an algorithm, indicated generally by the reference numeral 110, in accordance with an example embodiment. The algorithm 110 relates to the first process outlined above.

In the first process, the UE determines if the CA configuration (which the UE has listed as supported to the network upon registrations) is affected by one or more MSD types. After identifying an MSD affected CA case, MSD values are obtained from the UE stored memory (e.g. a look-up table). The MSD values as stored in the UE memory may be based on:
- The values found in 3GPP specification.
- An improved MSD value that the UE has been pre-configured with by the manufacturer.
- MSD values determined through measurements of self-interference (without requiring network assistance).
- A value obtained through reports of MSD from the network (network-determined MSD).
- A measurement procedure between the network and the UE in which the network assists the UE with a procedure for the UE to determine its self-interference level (network-assisted MSD determination).
- A method to extract the relation between the UE output power and the received signal quality including interference internal to the UE (UE procedure - no network assistance required).

From the highest MSD value among the MSD affected CA and its fallbacks, the UE calculates the output power level at which such MSD value would shift the UE sensitivity level. The relation between the MSD type (that includes the order of the harmonic response of the uplink) and the MSD value is used for calculating the new output power level, Pₘₐₓ, that matches output power to sensitivity level. The UE sets Pₘₐₓ when scheduling simultaneous transmission of one or more TX aggressor(s) and reception in one or more RX victim band(s) occurs.

As shown in the algorithm 110, a determination is made regarding whether MSD for CA configuration is defined. If so, Pmax is determined and set based on the highest MSD values stored in memory.

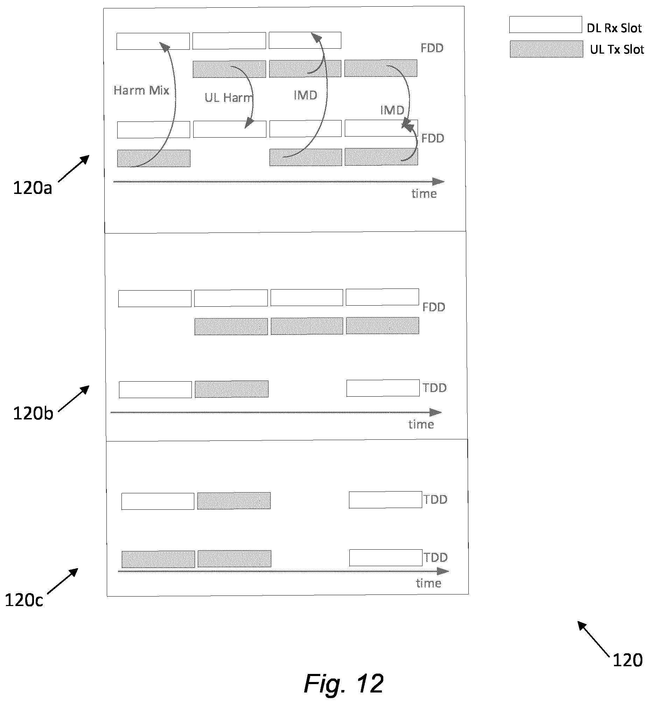

FIG. 12 shows plots, indicated generally by the reference numeral 120, in accordance with example embodiments. The plots 120 relate to the second process outlined above.

In the second process outlined above, the UE determines when and how to apply the Pₘₐₓ for its uplink based on factors such as network scheduling, priority of channels in the uplink and downlink etc. Example of network scheduling in different band combinations with FDD-FDD, FDD-TDD and TDD-TDD are shown in the plots 120.

MSD becomes a problem when UL transmission in at least one band is simultaneously active with DL reception in another ("victim") band. If the MSD is caused by IMD, then this will require simultaneous UL in two bands along with DL reception in victim band.

In the upper plot 120a (which relates to FDD-FDD), the arrows indicate how the uplink Tx slots are simultaneous to the downlink Rx slots and may cause self-interference. In FDD-TDD (the middle plot 120b), the mechanisms are similar, while the TDD-TDD case (the lower plot 120c) only occurs when the TDD bands are supporting simultaneous Rx/Tx.

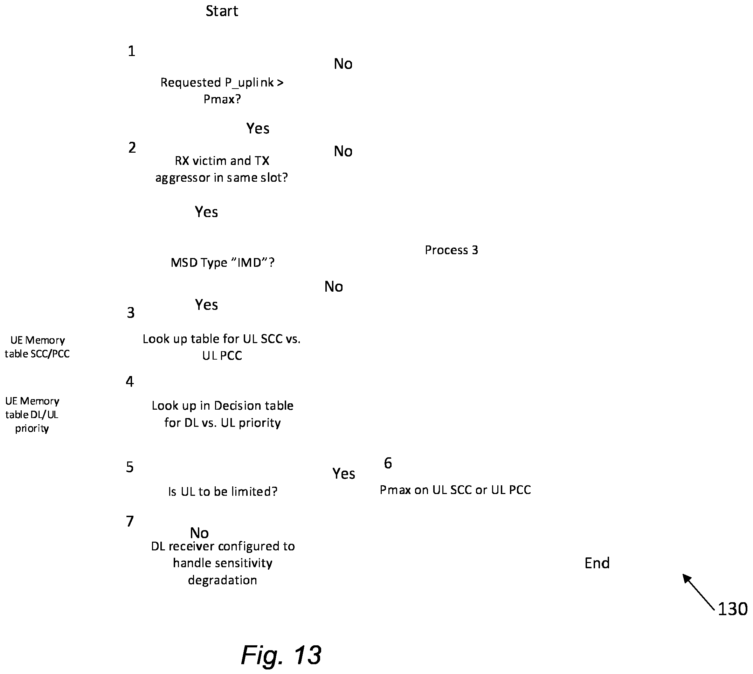

FIG. 13 is a flowchart showing an algorithm, indicated generally by the reference numeral 130, in accordance with an example embodiment. The algorithm 130 is an example implementation of the second process outlined above. The algorithm 130 determines if uplink power limitation needs to be applied and further determines the best component carrier candidate to apply it on. This process may, for example, be triggered in every downlink slot.

The algorithm 130 first checks (step 1) if current uplink power (P_uplink) is greater than the Pₘₐₓ calculated for the MSD type determined in process 1. If this is not the algorithm 130 (and process 2) ends.

If the check of step 1 is positive, the algorithm 130 continues to check if the slot has a simultaneous uplink transmission on one or more component carriers which can give rise to an MSD problem (step 2). This can be also be used for triggering process 3 (which is described further below). If there are no simultaneous RX/TX transmissions in the same slot, the algorithm 130 ends, but if the checks of both steps 1 and 2 confirm that there is a potential problem with self-interference, then the algorithm 130 proceeds.

Next, the UE determines whether IMD is the cause of MSD and, if so, decides which carrier should be limited in output power. A look up table is stored in the UE memory which contains the configurations based on decisions (see step 3). UL PCC (primary component carrier) means that the UE will limit the power on PCC, similarly UL SCC (secondary component carrier) means that the UE will limit the power on SCC. When the collision hits both control or data in PCC and SCC the outcome is UE dependent. This is shown as an example in Table 1 below:

**Table 1: Look up information in step 3 of algorithm 130**

| | PCC Control channel/RS | PCC Data Channel |
|---|---|---|
| SCC Control channel/RS | UE dependent | UL PCC |
| SCC Data Channel | UL SCC | UE dependent |

In the case of an SCC and PCC control channel, each component carrier may be limited equally. In the case of SCC and PCC data channel, each component carrier may be limited equally to give a total UL output power of Pₘₐₓ.

If the UE needs to decide if downlink degradation should be allowed or UL carrier should be power limited, a look up table is stored in the UE memory which contains the configurations based on decisions (see step 4 of the algorithm 130). An example of this is shown in Table 2 where Control and Reference signals are prioritized over data channel. This table might be a pre-configured table, or it could be based on the MSD management approval provided by NW for individual UL channels.

**Table 2: Look up information in step 4 of algorithm 130**

| | DL Data | DL Control/RS |
|---|---|---|
| UL Data | UE dependent | Pmax UL |
| UL Control/RS | Degrade DL | UE dependent |

In the case of UL and DL control/RS, the UE could decide to set Pₘₐₓ only on symbols having PDCCH/RS of interest and avoid limiting the output power of UL control/RS symbols. The decision can be made for the entire slot or on a per symbol basis.

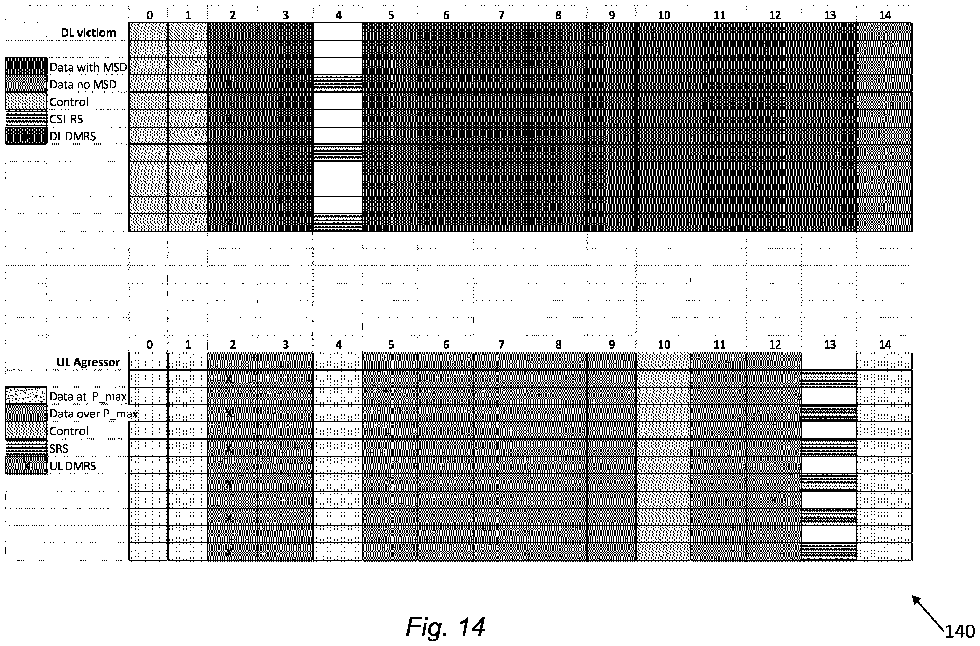

By way of example, FIG. 14 is a block diagram, indicated generally by the reference numeral 140, showing per symbol decision for a slot in accordance with an example embodiment. The block diagram 140 shows an example decision output with control, data, and reference symbols within a slot. The figure shows, for example:
- Priority being given to symbols with Reference signals. So, DL CSI-RS is received without any interference at all (symbol 4 at DL victim), and UL SRS is sent without any power limitation (symbol 13 at UL Aggressor).
- Symbol carrying control channel having priority (symbol 0,1). So, DL PDCCH is received without self-interference. Similarly, UL PUCCH is sent without power limitation (symbol 10 at UL Aggressor).
- DMRS and data symbols have similar interference profile. It is advantageous to have DMRS of uplink to have same power level as most of the other UL data symbols. Similarly, it is advantageous that the DMRS of downlink has the same SINR as that of most other DL data symbols.

Based on the outcome of the look up in step 4 of the algorithm 130, the UE determines whether to limit the UL (and proceed to step 6), or that the degrade will happen on the DL (step 7).

In step 6 (where the UL power is to be limited), the UE limits the UE output power on either the SCC or the PCC through Pₘₐₓ and exits the algorithm 130 (and the process 2).

In step 7, the UE has determined the DL will be degraded and may have means for mitigating this impact. The algorithm 130 (and the process 2) then ends. Mitigation can for example be implemented, for example, by:
- Ignoring part of DL slot which is impacted by MSD based on decisions in steps 3 and 4; or
- Enabling LLR weighting to counteract uneven SINR over the DL slot based on decisions in steps 3 and 4.

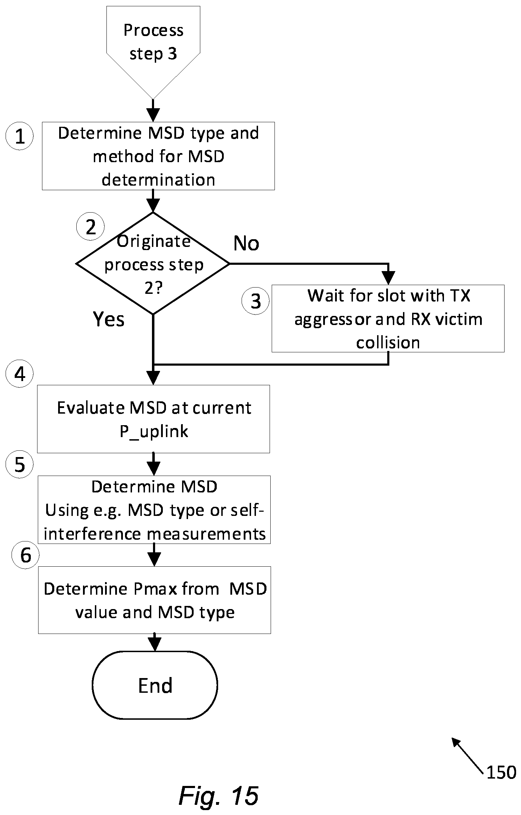

FIG. 15 is a flowchart showing an algorithm, indicated generally by the reference numeral 150, in accordance with an example embodiment. The algorithm 150 (which can be used for fine-tuning the Pₘₐₓ value) relates to the third process outlined above.

The third process of the method is for the UE to determine improvement to the UEs MSD performance using the MSD value in memory to configure Pₘₐₓ. Numerous events can trigger the algorithm 150. Example triggers include periodic timer expiry, change of environment detected (e.g. DL RSRP or channel estimates), uplink power level reaching above a threshold, CA allocation with potential MSD problem etc.. The algorithm 150 could also be triggered by step 2 of the algorithm 130 described above.

The algorithm 150 starts at step 1, where the MSD type is determined based on the CA allocation and look up in UE list of CA with MSD. Based on the MSD type, a suitable method for determination of MSD is chosen by the UE.

Step 2 determines whether the algorithm 150 was initiated by the algorithm 130. If so, the algorithm 150 moves to step 4. Otherwise, the algorithm 150 enters a stand-by state (step 3), which awaits occurrence of a slot collision. Specifically, in step 3, the UE waits for a slot where the MSD problem can arise due to simultaneous UL and DL activity in same slot.

MSD is evaluated at current P_uplink in step 4 of the algorithm 150. Step 4 may be implemented using an interference tolerant method. Tolerance to co-channel interference may be needed because often in cell-edge conditions where sensitivity degradation problem arises, neighbour cell interference is also a problem. Some examples of suitable methods include:
- A correlation-based method that uses a UEs own uplink signal to determine a correlation sequence which can used to correlate with the received downlink signal over a long period to make it tolerant to co-channel interference. This method can precisely measure self-interference level at current output power.
- An L1 SINR based method. The normal SINR measurements performed by the physical layer of a UE can be used to estimate self-interference. L1-SINR measurement cannot typically distinguish between self-interference and co-channel interference. Hence it may be required to make multiple measurements over multiple slots with different power levels. If the measured interference follows the changes in output power level, then it can be assumed to be self-interference which is measured and is above the co-channel interference level.

At step 5, the self-interference level can be extrapolated to determine self-interference level at Pₘₐₓ, the maximum output power of UE. This can be used to determine MSD level at Pₘₐₓ based on the MSD type. Alternatively, the UE could conclude that there is no MSD at current Pₘₐₓ level, based on step 4 self-interference level assessment.

In step 6, Pₘₐₓ is calculated from the MSD level determined in step 5. The newly calculated Pₘₐₓ level is then stored in the UE memory for use in the algorithm described above (e.g. in the process 2). Alternatively, if step 5 concludes that current Pₘₐₓ does not have any MSD problem, the UE may increase Pₘₐₓ by a small increment and store this incremented value for further use.

In some example embodiments, the UE is configured to resolve output power control issues on a slot-to-slot basis. Existing L1-measurement reporting mechanism are not generally fast enough for this.

In some example embodiments, the UE is prevented from transmitting in an MSD affected CA configuration to a level that causes self-interference to exceed the signal input power level in an RX victim band. The UE can be arranged to only limit the TX output power when it has synchronous UL-DL activity between the aggressor and victim bands.

In some example embodiments, the network will detect a potential lack in uplink power of the UE for an MSD affected CA configuration, but avoid losing the CA configuration caused by UE self-interference. For example, the network may only detect the potential lack in uplink power of the UE when it has synchronous UL-DL activity between the aggressor and victim bands.

In some example embodiments, the UE does not require the network to assist in determining the MSD of the UE. Moreover, the UE may not need to exchange MSD values and MSD types with the network.

Example embodiments described herein provide flexibility in how the UE may implement the method for determining the self-interference.

In some example embodiments, UE MSD data improves over time taking ageing effects into account.

Many embodiments described herein relate to devices of a mobile communication system, such as user device or user equipment(s). Such devices may be smartphones (or similar devices), IoT devices or similar sensors, or many other devices of a mobile communication system.

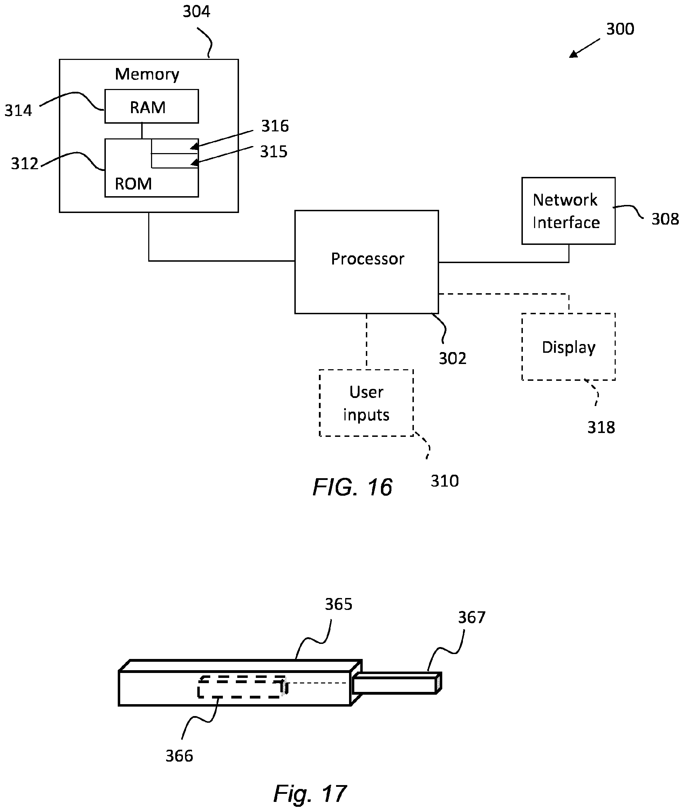

For completeness, FIG. 16 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms and sequences 10, 50, 60, 80, 100, 110, 130 and 150 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 17 shows a tangible media, in the form of a removable memory unit 365, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. Of course, other forms of tangible storage media may be used, as will be readily apparent to those of ordinary skilled in the art. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and sequences of Figures 1, 5, 6,, 8, 10, 11, 13 and 15 are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. A device of a mobile communication system, the device comprising:
means for determining a safe output power level of the device based, at least in part, on a determined maximum sensitivity degradation type of the device, wherein said safe output power level is a transmit power of the device at which self-interference would affect sensitivity of a receiver of the device by no more than a threshold amount;
means for receiving a power command, from a network node of the mobile communication system, for controlling the transmit power of the device;
means for determining whether the determined safe output level would be exceeded by implementing the received power command; and
means for controlling device transmissions in accordance with a self-interference control algorithm in the event that it is determined that the safe output power level would be exceeded by implementing said power command.

2. A device as claimed in claim 1, wherein the self-interference control algorithm limits a transmit power of the device to the determined safe output power level in the event that it is determined that the safe output level would be exceeded by implementing said power command.

3. A device as claimed in claim 1 or claim 2, wherein controlling said device transmissions includes controlling the transmit power level of the device.

4. A device as claimed in any one of claims 1 to 3, wherein controlling said device transmissions includes adjusting timings of one or more uplink transmissions of the device.

5. A device as claimed in any one of the preceding claims, wherein controlling said device transmissions includes prioritisation between transmissions of different types.

6. A device as claimed in any one of the preceding claims, wherein controlling said device transmissions includes:
prioritisation between uplink and downlink transmissions, and/or
controlling power levels of said transmissions on a slot-to-slot basis.

7. A device as claimed in any one of the preceding claims, further comprising:
means for determining said maximum sensitivity degradation type.

8. A device as claimed in any one of the preceding claims, further comprising:
means for determining a maximum sensitivity degradation value for the device, wherein said safe output power level is determined based, at least in part, on said determined maximum sensitivity degradation value.

9. A device as claimed in claim 8, wherein the maximum sensitivity degradation value is based, at least in part, on a carrier aggregation configuration or a dual connectivity configuration of the device.

10. A device as claimed in claim 8 or claim 9, further comprising:
means for determining and storing maximum sensitivity degradation values during use of the device.

11. A device as claimed in any one of the preceding claims, wherein the power command is a transmit power control command indicating whether a transmit power level of the device should be increased or decreased.

12. A device as claimed in claim 11, wherein controlling said device transmissions includes not implementing a transmit power control command to increase the transmit power level in the event that the determined safe output level of the device has been reached or would be exceeded by said increase.

13. A device as claimed in any one of the preceding claims, further comprising:
means for determining and updating stored safe output power level data.

14. A method comprising:
determining a safe output power level of a device of a mobile communication system based, at least in part, on a determined maximum sensitivity degradation type of the device, wherein said safe output power level is a transmit power of the device at which self-interference would affect sensitivity of a receiver of the device by no more than a threshold amount;
receiving a power command, from a network node of the mobile communication system, for controlling the transmit power of the device;
determining whether the determined safe output level would be exceeded by implementing the received power command; and
controlling device transmissions in accordance with a self-interference control algorithm in the event that it is determined that the safe output power level would be exceeded by implementing said power command.

15. A computer program comprising instructions which, when executed by an apparatus, cause the apparatus to:
determine a safe output power level of a device of a mobile communication system based, at least in part, on a determined maximum sensitivity degradation type of the device, wherein said safe output power level is a transmit power of the device at which self-interference would affect sensitivity of a receiver of the device by no more than a threshold amount;
receive a power command, from a network node of the mobile communication system, for controlling the transmit power of the device;
determine whether the determined safe output level would be exceeded by implementing the received power command; and
control device transmissions in accordance with a self-interference control algorithm in the event that it is determined that the safe output power level would be exceeded by implementing said power command.
